# EUROPEAN PATENT APPLICATION

(11) **EP 4 574 755 A1**
(43) Date of publication of application: **25.06.2025**
(21) Application number: 23275180.0
(22) Date of filing: 22.12.2023
(51) Int. Cl.: C01B 32/05, C01B 32/40, C01B 32/55, C25B 1/00, C25B 15/08, B82Y 40/00, C25B 1/135

(54) **A METHOD OF PRODUCING CARBON MATERIALS FROM FEEDSTOCK GASES**

(30) Priority: 21.12.2023 GB 202319842
(71) Applicant: UP Catalyst OÜ, Harjumaa 12618, Tallinn (EE)
(72) Inventor: KARU, Einar, 12618 Tallinn (EE); URB, Gary, 12618 Tallinn (EE)
(74) Representative: Williams Powell

(57) **Abstract**

A method of producing carbon materials from one or more carbon-containing feedstock gases by melting one or more electrolytes inside a reactor chamber, adding from 0.03 wt% to 0.5 wt% catalyst of the total electrolyte mass at a dosage rate from 16.7 ppm hour⁻¹ to 277.8 ppm hour⁻¹, providing one or more feedstock gases into the molten electrolyte in the reactor chamber with a flow rate comprising at least 4.2 standard cm³ min⁻¹ A⁻¹ mass equivalent of CO₂, and applying a direct current density in the range from 100 A m⁻² up to 20 000 A m⁻² to one or more anodes and one or more cathodes.

## Description

### TECHNICAL FIELD

The present disclosure relates generally to production of carbon materials, and more specifically, to methods for producing carbon materials from feedstock gases.

### BACKGROUND

Carbon materials in different forms such as powders and dispersions are increasingly important in the production of energy storage devices (e.g., supercapacitors, batteries, fuel cells and other energy storage systems) due to their electrical and mechanical properties. There are different methods and systems known for producing carbon materials such as graphite, graphene, carbon nanotubes, carbon nanofibers, carbon nanospheres or other carbon materials. One of the known methods is for example chemical vapour deposition (CVD) method, which is the current industry standard to produce carbon nanotubes. The CVD method uses 800 MWh energy to produce 1 ton of carbon nanotubes. Thus, the energy usage for producing carbon materials is huge and this makes production very expensive. Thus, there is a need to reduce energy consumption in the production of carbon materials. Furthermore, the CVD method uses a fossil fuel-based feedstock which makes the method harmful to the environment.

US20220388847 Licht et al. proposes a method of synthesising helical carbon nanostructures via an electrolysis reaction using a molten carbonate electrolyte and carbon-containing input between electrodes of a reaction vessel.

Liu et al in "Controlled Growth of Unusual Nanocarbon Allotropes by Molten Electrolysis of CO2" Catalysts 2022, 12, 125 relates to a similar technology as above, further disclosing the effect of different additives in the molten electrolyte on the resulting nano-carbon morphology.

Laasonen et al in "Insights into carbon production by CO2 reduction in molten salt electrolysis in coaxial-type reactor" disclose a coaxial-type reactor used for reducing CO₂ to carbon using various electrolytes and no catalyst, with the purpose of studying the voltage-current characteristics of molten salt electrolysis of CO₂.

The present application seeks to provide an improved method of producing carbon from carbon-containing feedstock gases.

### SUMMARY OF INVENTION

The aim of the present disclosure is to provide an efficient solution to produce carbon materials. The aim of the disclosure is achieved by a method of producing carbon materials from feedstock gases as defined in the appended independent claim to which reference is made. Advantageous features are set out in the appended dependent claims.

According to a preferred embodiment of the present disclosure, there is provided a method of producing carbon materials, wherein the method comprising following steps: melting one or more electrolytes inside a reactor chamber, adding from 0.03 wt% to 0.5 wt% catalyst of the total electrolyte mass at a dosage rate from 16.7 ppm hour⁻¹ to 277.8 ppm hour⁻¹, providing one or more feedstock gases into the molten electrolyte in the reactor chamber with a flow rate comprising at least 4.2 standard cm³ min⁻¹ A⁻¹ mass equivalent of CO₂, applying a direct current density in the range from 100 A m⁻² up to 20 000 A m⁻² (preferably up to 6 000 A m⁻²) to a one or more anodes and one or more cathodes. The advantage of the method according to the present disclosure is that the catalyst reaches the cathode more efficiently and in a controlled way, providing carbon nanotube growth nucleation centers and resulting in higher-grade carbon nanotube morphology.

The method enables efficient increase of the production of carbon materials per year in tons, wherein at the same time reducing the amount of emitted CO₂. Additionally, the present method enables the production of carbon materials in controlled ways to achieve morphology suitable for energy storage devices. The produced materials can be used for producing carbonaceous powders, carbonaceous dispersions, oxidized carbon powders, heteroatom-enriched powders which are used for electrical vehicle batteries, stationary energy storages (e.g., lithium-ion batteries, lithium iron phosphate batteries, sodium-ion batteries, lithium-silicon batteries).

### DETAILED DESCRIPTION OF EMBODIMENTS

The following detailed description illustrates embodiments of the present disclosure and ways in which they can be implemented.

A device suitable for carrying out the present invention includes a reactor chamber adapted to accommodate one or more electrolytes selected from at least one of an alkaline or one or more alkaline-earth electrolytes, a one or more anodes arranged in an 3D structure, a one or more cathodes, a power source for applying an electric current to the one or more anodes and the one or more cathodes, a heating unit configured to heat the reactor chamber to melt the one or more electrolytes, a gas supply unit configured to provide one or more feedstock gases into a molten electrolyte in the reactor chamber.

However, the skilled person will appreciate that any suitable conventional device can be used.

The device may be a modular device, wherein two or more devices are configured to work in a system of producing carbon materials from one or more feedstock gases. The device can be connected to a factory or to a production network that emits feedstock gases.

The reactor chamber of the device is adapted to accommodate one or more electrolytes selected from at least one of an alkaline or one or more alkaline-earth electrolytes and may have a round or square cross-section. The reactor chamber is made of nickel alloy, which optionally may be coated with NiCoCrAl[Ta, Hf, Si]Y, Al₂O₃ coatings to improve corrosion resistance or ceramic tiles like Al₂O₃.

According to the method of the present disclosure the reactor chamber is used for electrolysis, purification and functionalisation with heteroatoms. The reactor chamber comprises a metal vessel adapted to accommodate the electrolyte media (consisting of one or the combination of lithium, potassium, sodium carbonate or halides or any mixture thereof). In particular, the reactor chamber is adapted to accommodate one or more electrolytes including at least one of an alkaline or one or more alkaline earth electrolytes. According to the embodiments the one or more electrolytes comprise from 90% up to 100% of carbonate electrolyte. The carbonate electrolyte is selected to be at least one of Na₂CO₃, Li₂CO₃, K₂CO₃, BaCO₃, CaCO₃.

According to the embodiments of the present disclosure, the one or more electrolytes further comprises a catalyst which is at least one selected from Fe₂O₃, Li₂O, LiOH, NiO, ZnO, Cr₂O₃, Ni or others. The amount of Fe₂O₃, Li₂O, LiOH, NiO, ZnO, Cr₂O₃, Ni in the electrolyte may be from 0.03 wt% up to 10 wt% (preferably from 0.03 wt% to 0.5 wt%). The catalysts enable controlled structures of the particles of carbon materials to be obtained. E.g., Fe₂O₃ enables straight or predominantly entangled carbon nanotubes to be obtained. Adding the metal oxides, e.g., Fe₂O₃ (preferably at 0.1 %wt) with a continuous controlled linear dosing regime throughout the synthesis process to the electrolyte further enables nucleation centers to be generated. Optionally, the reactor chamber comprises nickel metal alloy. The benefit of the reactor chamber comprising the nickel metal alloy is that it enables low impurity levels and uniform carbon morphology to be achieved.

The power source for applying an electric current to the one or more anodes and the one or more cathodes is adapted to provide to the device 12 000 - 24 000 ampere (A) current. E.g., 4 000 A. According to the embodiments of the present disclosure, the applied direct current density is in the range from 100 A m⁻² up to 20 000 (preferably 6 000) A m⁻². E.g., when using a direct current (DC) power supply or rectifier the positive (+) terminal is connected to the one or more anode(s) and negative (-) terminal connected to the one or more cathode(s). The high current density and low voltage enables slower growth of carbon material and thus to achieve better structure of the carbon material. As a power source, renewable energy such as solar, wind, hydro etc. power can be used.

In the embodiments of the present disclosure the heating unit is configured to heat the one or more electrolytes inside the reactor chamber to a temperature from 400 °C to 900 °C. In the case of a lithium carbonate electrolyte, the preferred range is from 730 °C to 800 °C. The heating unit may be one or more insulated industrial ovens for heating the reactor chamber. The heating unit enables the melt salt to be obtained in the reactor chamber. The reactor chamber may be heated to e.g., 770 °C to melt the electrolyte (e.g., lithium carbonate).

The gas supply unit for providing one or more feedstock gases into a molten electrolyte in the reactor chamber is configured to provide the gas continuously when the device is running. The gas supply unit may comprise means to diffuse the feedstock gases evenly into the electrolyte. Such means to diffuse the feedstock gases may be piping of the feedstock gases arranged in the reactor chamber. Optionally, the gas supply unit comprises electrolyte mixing means to diffuse the CO₂ gas evenly into the electrolyte. The electrolyte mixing means enable the gas to be dissolved and distributed in the electrolyte evenly. Slow mass transport in the rector creates a concentration gradient for oxides, leading to faster corrosion of the anode. The electrolyte mixing means may be an S-shaped tube comprising holes and arranged in the reactor chamber inside the electrolyte. If the feedstock gas is pumped through the S-shaped tube inside the electrolyte it generates feedstock gas bubbling in the electrolyte and enables the electrolyte to be mixed.

According to the embodiments of the present disclosure, the one or more feedstock gases comprise at least one of an exhaust gas or industrial gas comprising one or more of CO, CO₂ or CH₄. Using feedstock gases such as exhaust gases and industrial flue gases or other waste gases comprising CO₂ enables environmental damage to be reduced. For example, the CO₂ may be industrial waste CO₂ or exhaust CO₂ from heavy industry emitters, which according to the present disclosure is used as the feedstock for producing carbon materials.

The method may be carried out by a device comprising a heating unit (e.g., a furnace), a reactor chamber, one or more anodes arranged in a 3D structure, a gas supply unit and a power source.

The electrodes and electrolytes (e.g., lithium carbonate, potassium carbonate, sodium carbonate or lithium, potassium or sodium halides or any mixture thereof) are inserted in the reactor chamber. The electrodes are connected to the power source and as the current is applied to the electrodes, the electrolysis process initiates. The power source provides the electrodes with electrons to split the electrolyte into solid carbon and dissolved alkali metal oxide, with a current input in the range of 12 000 - 24 000 A and direct current density is in the range from 100 A m⁻² up to 20 000 A m⁻². Direct current of the power source positive (+) terminal is connected to the anode and negative (-) terminal connects to the one or more cathodes. The specific current density used per cathode surface area may be e.g., 0.08 A cm⁻³ - 0.16 A cm⁻³.

The electrodes and the electrolytes are ideally heated up to a temperature from 450 °C to 850 °C. Lithium carbonate is preferably used as an electrolyte. The heating unit is heated to 770 °C to melt the electrolyte and iron(III) oxide Fe₂O₃ catalyst (at 0.1 wt%) is added to the electrolyte salt to generate nucleation centers.

The oxide anions migrate onto the one or more anodes, where they are oxidized into gaseous oxygen. At the same time, the electrolyte readily absorbs CO₂. The electrochemical process is initiated by the molten electrolyte and applied potential to the electrodes. In the process the CO₂ molecule is separated into C and O₂. Oxygen is evolved and is optionally vented out from the reactor chamber by a ventilation system. At the same time the carbon is collected at the one or more cathodes of the electrodes.

Concentrated CO₂ is bubbled through an S-shaped gas supply unit which sits close to the bottom of the reactor chamber and has holes in the bottom side of the tube. The flow rate of CO₂ preferably needs to be at least 4.2 standard cm³ min⁻¹ A⁻¹.

The maximum flow is limited by bubbling, which would, if too intense, decrease the contact area between the electrolyte and the electrodes. As the current is applied to the electrodes, the electrolysis process initiates. Carbon transforms from Li₂CO₃ to carbon material such as multi-walled carbon nanotubes (MWCNT) and deposits onto the cathode.

The process is a four-electron reduction. The transformation also produces Li₂O and O₂ gas, which is bubbled out from the molten electrolyte. The produced Li₂O on the other hand reacts immediately with incoming CO₂ acting as a carbon capture to produce Li₂CO₃. Thus, the process is CO₂ and electrical energy dependent, which are the only consumables in the process.

At the beginning of the process the electrolyte including additives is melted by the heating unit in which the reactor chamber sits. After the electrolyte is in a molten state the CO₂ flow is turned on with a mass flow controller (MFC) and the electrodes are lowered into the molten electrolyte. Thereafter, the current from the power supply is turned on, which commences the electrolysis electrochemical transformation process. The MWCNT grows on the cathode with a rate of about 0.12 g A⁻¹ h⁻¹. The resistive heating taking place between the anode and cathode releases excess heat to the molten electrolyte which keeps it molten, therefore the heating unit extra heating is required only at the beginning to melt the electrolyte salt and during the times when the electrolysis current is switched off.

The method may further comprise adding additives to the electrolyte, e.g., electrolyte dopant additives containing dopant heteroatoms such as N, S, B, Fe, Mn, Co, Ni, Zn, P, Cu, Cr, Ti. Adding the additives enables the inclusion of controlled quantities of metal oxides into the electrolyte, which act as catalysts instead of impurities from electrodes.

In an embodiment, the one or more feedstock gases are bubbled into the molten electrolyte in the reactor chamber. The bubbled gas enables it to be mixed in the molten electrolyte and directed to the electrodes.

The method according to the embodiments of the present disclosure thus produces carbon materials such as carbon nanotubes (CNT), carbon nanospirals, carbon nanospheres, carbon nanofibers (CNF), carbon nanoflakes, multi-walled carbon nanotubes (MWCNT), oxidized multiwall carbon nanotubes (OMWCNT).

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Figure 1 shows a block scheme illustrating an embodiment of a device for producing carbon materials from one or more feedstock gases according to the present disclosure;
Figure 2 shows a schematic illustration of an embodiment of a device for carrying out the present invention; and
Figures 3A and 3B show SEM images comparing carbon nanostructures formed from the addition of catalyst in bulk compared to a controlled dosing regime.

### DETAILED DESCRIPTION OF THE DRAWINGS

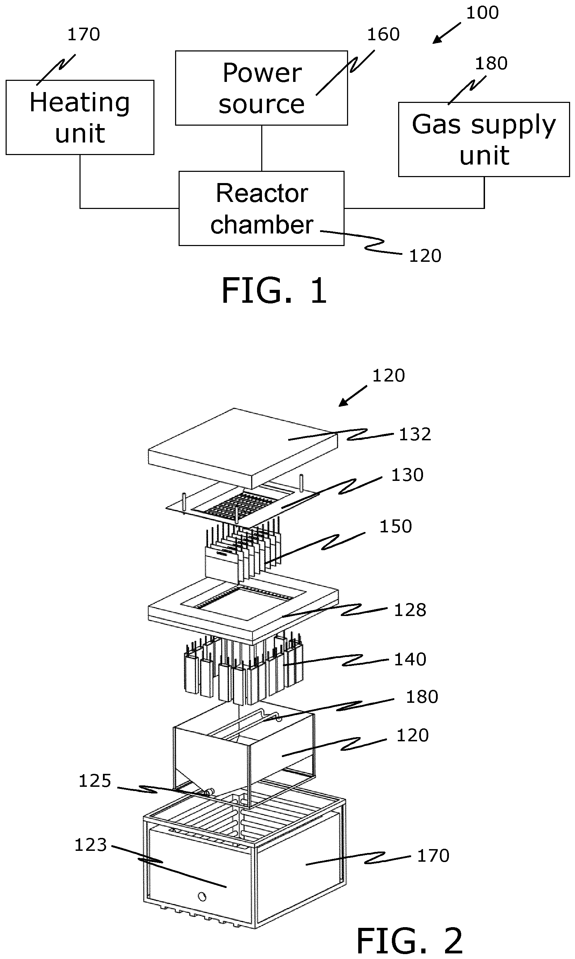

Referring to Figure 1, there is shown a block scheme illustrating an embodiment of a device for producing carbon materials from one or more feedstock gases according to the present disclosure. The device comprises a reactor chamber **120,** a power source **160,** a heating unit **170** and a gas supply unit **180.**

Referring to Figure 2, there is shown a schematic illustration of an embodiment of a device according to the present disclosure. The device comprises a heating unit **170** having a drainage opening **123,** a reactor chamber **120** insertable to the heating unit **170,** wherein the reactor chamber **120** comprises a drainage **125** and a gas supply unit **180,** an electrode interface having a first frame **128** with sockets for anodes mounting and a second frame **130** with cathode sockets for cathodes mounting, sheet anodes **140** arranged in an 3D structure adapted to be mountable to the sockets of the first frame **128,** multiple cathodes **150** adapted to be mountable to the sockets of the second frame **130** and a cover of the furnace **132.**

The gas supply unit **180** is arranged in the reactor chamber **120.** The anodes **140** arranged in the 3D structure mounted to the first frame **128** are insertable to the vessel of the one or more electrolytes **124,** wherein when the anodes **140** arranged in the 3D structure are inserted to the reactor chamber **120,** the pipeline of the gas supply unit **180** is arranged in the reactor chamber **120.** The multiple cathodes **131** mounted to the second frame **130** are insertable to the reactor chamber **120.**

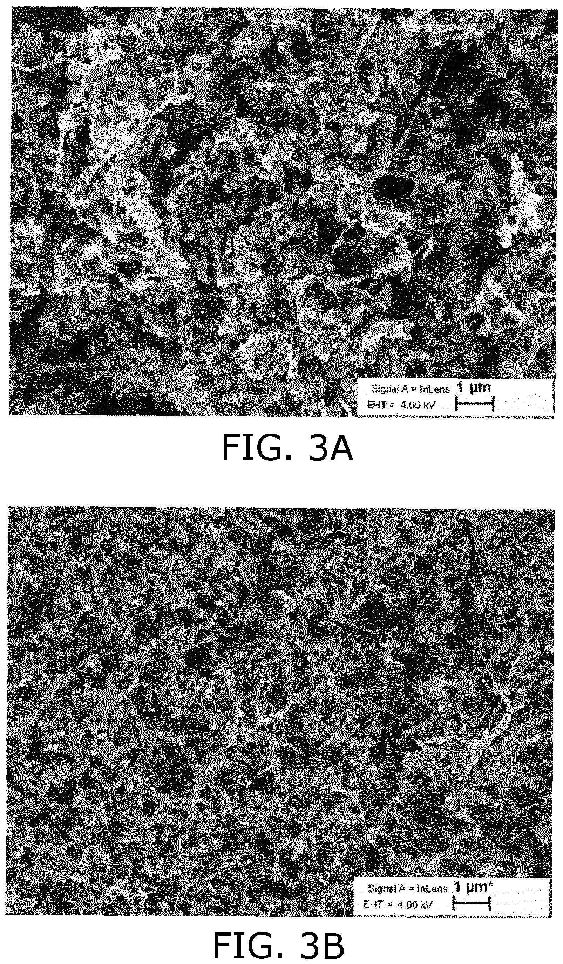

Referring to Figure 3A, there is shown an SEM image of the morphology of carbon nanotubes mixed with carbon black resulting from a bulk catalyst addition method. Figure 3B shows an SEM image of the morphology of carbon nanotubes mixed with carbon black resulting from a controlled catalyst dosing method of the present invention.

### WORKED EXAMPLE

Carbon nanomaterials were synthesized within an Inconel 600 vessel, securely positioned within a stainless steel safety vessel. The Inconel 600 vessel was filled with high purity Li₂CO₃ (>99%,) supplemented with 0.1 wt% of Fe₂O₃ (purity ≥96%, Sigma Aldrich, Germany). An Inconel 600 anode and a Monel 400 cathode were positioned approximately 1-2 cm above the bottom of the reactor. Electrolysis was initiated by applying a direct current electrical program determined by precise cathode surface area measurements. A controllable power supply was utilized to regulate the applied current over time. Pressurised CO₂ (>98% purity) was guided into the bottom of molten salt with constant flow (4.2 standard cm³ min⁻¹ A⁻¹ mass equivalent) which was maintained by the mass flow controller. The synthesis duration was set at 18 hours.

Upon completion of the reaction, the carbon product was removed from the cathode. The collected material underwent electrolyte demineralization, involving a wash with 10M HCl to eliminate excess electrolyte and metal impurities. Subsequent steps included water wash neutralization, vacuum filtration and drying in an oven for 12 hours at 60°C.

The results are shown in Figure 3A.

In another experiment, carbon nanomaterials were synthesized within an Inconel 600 vessel, securely positioned within a stainless steel safety vessel. The Inconel 600 vessel was filled with high purity Li₂CO₃ (>99%). The electrolyte was allowed to melt overnight, ensuring homogeneity and complete moisture removal.

An Inconel 600 anode and a Monel 400 cathode were positioned approximately 1-2 cm above the bottom of the reactor. Electrolysis was initiated by applying a direct current electrical program determined by precise cathode surface area measurements. A controllable power supply was utilized to regulate the applied current over time. Pressurised CO₂ (>98% purity) was guided into the bottom of molten salt with constant flow (4.2 standard cm³ min⁻¹ A⁻¹ mass equivalent) which was maintained by the mass flow controller. One hour before the electrosynthesis starts, the controlled dosing of the Fe₂O₃ started with a constant rate at mass dosage rate 52.6 ppm hour⁻¹ to reach the total catalyst amount 0.1 wt% of the total molten electrolyte mass until the end of the synthesis. The synthesis duration was set at 18 hours.

Upon completion of the reaction, the carbon product was removed from the cathode. The collected material underwent electrolyte demineralization, involving a wash with 10M HCl to eliminate excess electrolyte and metal impurities. Subsequent steps included water wash neutralization, vacuum filtration and drying in an oven for 12 hours at 60°C.

The results are shown in Figure 3B.

As seen from the SEM image results of the first experiment (Figure 3A), if the catalyst is added in bulk in one go, the end carbon product morphology is not clear multi-walled carbon nanotubes (MWCNTs). Rather, a mixture of spherical carbon (carbon black [CB] /nano-onions) start to slightly grow further, i.e. lower grade mixture of CB/MWCNTs. The reason for this is that the majority of the Fe₂O₃ catalyst drops to the bottom of the reactor vessel. This was detectable even by slightly stirring the molten electrolyte mixture with an alumina rod, with a higher viscosity noticeable at the bottom of the mixture. As the catalyst drops to the bottom, the Fe₂O₃ does not reach the cathode efficiently anymore to act as a carbon nanotube growth nucleation center.

With the controlled dosing method of the second experiment, the SEM image results in Figure 3B demonstrate that adding the Fe₂O₃ catalyst in a controlled constant manner throughout the whole synthesis process obtains a carbon product with a clearer MWCNTs morphology.

The suitable range determined is 16.7 ppm hour⁻¹ to 277.8 ppm hour⁻¹ to reach a total amount of added 0.03 wt% - 0.5 wt% of Fe₂O₃ from the total electrolyte mass in the reactor vessel by the end of the 18 hour synthesis. If the concentration of the Fe₂O₃ catalyst gets too high, it alters the end carbon product morphology once again to lower grade carbon.

## Claims

1. A method of producing carbon material from one or more carbon-containing feedstock gases, the method comprising the following steps:
(a) melting one or more electrolytes inside a reactor chamber,
(b) adding a catalyst to the molten electrolyte, wherein the catalyst is added from 0.03 wt% to 0.5 wt% of the total electrolyte mass at a dosage rate from 16.7 ppm hour⁻¹ to 277.8 ppm hour⁻¹,
(c) adding one or more feedstock gases to the molten electrolyte at a flow rate of at least 4.2 standard cm³ min⁻¹ A⁻¹ mass equivalent of CO₂,
(d) applying a direct current density in the range from 100 A m⁻² up to 20 000 A m⁻² to one or more anodes and one or more cathodes in contact with the molten electrolyte.

2. A method as claimed in claim 1 wherein the catalyst is Fe₂O₃, Li₂O, LiOH, NiO, ZnO, Cr₂O₃, Ni, or any combination thereof.

3. A method as claimed in claim 1 or 2 wherein the catalyst is Fe₂O₃.

4. A method as claimed in any preceding claim wherein the electrolyte includes a carbonate-group.

5. A method as claimed in any preceding claim wherein the electrolyte includes Na₂CO₃, Li₂CO₃, K₂CO₃, BaCO₃, CaCO₃ or any combination thereof.

6. A method as claimed in any preceding claim wherein the electrolyte includes Li₂CO₃.

7. A method as claimed in any preceding claim, wherein the one or more electrolytes is heated to a temperature from 400 °C to 900 °C.

8. A method as claimed in any preceding claim, wherein the one or more electrolytes comprises from 90 % to 100 % carbonate-group-containing electrolyte.

9. A method as claimed in any preceding claim, wherein the feedstock gas is one or a combination of CO₂, CH₄ and CO.

10. A method as claimed in any preceding claim, wherein the feedstock gas is CO₂.

11. A method as claimed in any preceding claim further comprising removing the carbon material from the one or more cathodes.

12. A method as claimed in any preceding claim, wherein the one or more feedstock gases are bubbled into the molten electrolyte.

13. A method as claimed in any preceding claim, wherein the dosage rate is substantially linear.
